# EUROPÄISCHE PATENTANMELDUNG

(11) **EP 1 428 596 A1**
(43) Veröffentlichungstag der Anmeldung: **16.06.2004**
(21) Anmeldenummer: 02406080.8
(22) Anmeldetag: 09.12.2002
(51) Int. Cl.: B21F 27/10, B21F 23/00, B65G 47/14

(54) **Anlage zum Herstellen von Drahtgittern**

(71) Anmelder: H.A. SCHLATTER AG, CH-8952 Schlieren Zürich (CH)
(72) Erfinder: Ruf, Roland, 8623 Wetzikon (CH)
(74) Vertreter: Roshardt, Werner Alfred, Dipl.-Phys.

(57) **Zusammenfassung**

Eine Gitterschweissanlage zum Herstellen von Drahtgittern aus einander kreuzenden und an den Kreuzungspunkten miteinander verschweissten Längs- und Querdrähten (1) weist wenigstens eine Schweissmaschine zum Verschweissen eines Querdrahts (1) mit einer Mehrzahl von Längsdrähten und eine Querdrahtzuführungseinrichtung zum Zuführen des Querdrahts (1) an die Schweissmaschine auf. Die Querdrahtzuführungseinrichtung umfasst eine Querdrahtbereitstellungseinrichtung (10), die zur bundweisen Aufnahme von Querdrähten (1), zur Vereinzelung der Querdrähte (1) und zur Bereitstellung der vereinzelten Querdrähte (1) nacheinander in einer durch die Querdrahtbereitstellungseinrichtung (10) definierten Bereitstellungsposition (14) ausgebildet ist. Die Querdrahtbereitstellungseinrichtung (10) weist ein stationäres Maschinengestell (3, 23) auf sowie wenigstens ein erstes Transportband (7, 8, 9), das zur Förderung der vereinzelten Querdrähte (1) bezüglich dem Maschinengestell (3, 23) ausgebildet ist und eine Zuführrichtung definiert. Das erste Transportband (7, 8, 9) ist als Teil einer ersten Montageeinheit (17, 18, 19) ausgebildet, die als Ganzes quer zur Zuführrichtung verschiebbar ist. Die Querdrahtbereitstellungseinrichtung (10) weist weiter erste Verschiebemittel (24, 26) zum Verschieben der ersten Montageeinheit (17, 18, 19) quer zur Zuführrichtung auf. Die Gitterschweissanlage ist rasch und einfach anpassbar zur Verarbeitung von Querdrähten mit geänderten Querdrahtabmessungen.

## Beschreibung

### Technisches Gebiet

Die Erfindung betrifft eine Anlage zum Herstellen von Drahtgittern aus einander kreuzenden und an den Kreuzungspunkten miteinander verschweissten Längs- und Querdrähten.

### Stand der Technik

Bisher bekannte Gitterschweissanlagen zur Herstellung von Drahtgittern der eingangs genannten Art wie z.B. Baustahlmatten, Gitterstrukturen von Einkaufswagen, Lagergestellen u.ä., ermöglichen zwar die Herstellung von Drahtgittern mit einer hohen Produktionsrate, solange sämtliche Querdrähte jeweils im Wesentlichen identisch zueinander ausgebildet sind. Sobald jedoch mittels derselben Gitterschweissanlage Querdrähte mit unterschiedlichen Durchmessern und/oder unterschiedlicher Länge verarbeitet werden sollen, sind zeitaufwändige und komplizierte Umrüstungsarbeiten erforderlich, um die Gitterschweissanlage an die geänderten Querdrahtabmessungen anzupassen.

### Darstellung der Erfindung

Aufgabe der Erfindung ist die Angabe einer Gitterschweissanlage, welche eine rasche und einfache Anpassung der Gitterschweissanlage zur Verarbeitung von Querdrähten mit geänderten Querdrahtabmessungen ermöglicht.

Die Lösung der Aufgabe ist durch die Merkmale des Anspruchs 1 definiert. Gemäss der Erfindung weist eine Gitterschweissanlage zum Herstellen von Drahtgittern aus einander kreuzenden und an den Kreuzungspunkten miteinander verschweissten Längs- und Querdrähten wenigstens eine Schweissmaschine zum Verschweissen eines Querdrahts mit einer Mehrzahl von Längsdrähten und eine Querdrahtzuführungseinrichtung zum Zuführen des Querdrahts an die Schweissmaschine auf. Die Querdrahtzuführungseinrichtung umfasst eine Querdrahtbereitstellungseinrichtung, die zur bundweisen Aufnahme von Querdrähten, zur Vereinzelung der Querdrähte und zur Bereitstellung der vereinzelten Querdrähte nacheinander in einer durch die Querdrahtbereitstellungseinrichtung definierten Bereitstellungsposition ausgebildet ist. Die Querdrahtbereitstellungseinrichtung weist ein stationäres Maschinengestell auf sowie wenigstens ein erstes Transportband, das zur Förderung der vereinzelten Querdrähte bezüglich dem Maschinengestell ausgebildet ist und eine Zuführrichtung definiert. Das erste Transportband ist als Teil einer ersten Montageeinheit ausgebildet, die als Ganzes quer zur Zuführrichtung verschiebbar ist. Die Querdrahtbereitstellungseinrichtung weist weiter erste Verschiebemittel zum Verschieben der ersten Montageeinheit quer zur Zuführrichtung auf.

Im vorliegenden Zusammenhang wird die Richtung des Transports des Querdrahts vom Ort seiner Aufnahme durch die Zuführungseinrichtung bis zur Schweissmaschine als Zuführrichtung bezeichnet. Die Zuführrichtung ändert sich in der Regel während des Transports des Querdrahts durch die Zuführungseinrichtung. Sie hängt vom Ort des Querdrahts in der Zuführungseinrichtung ab. Im Bereich des Transportbands für den Querdrahttransport entspricht die Zuführrichtung der Förderrichtung des Querdrahts auf dem Transportband.

Indem das erste Transportband als Teil einer als Ganzes quer zur Zuführrichtung verschiebbaren ersten Montageeinheit ausgebildet ist und die Querdrahtbereitstellungseinrichtung mit ersten Verschiebemitteln zum Verschieben der ersten Montageeinheit versehen ist, wird eine einfache und rasche Verstellung der Position des ersten Transportbands quer zur Förderrichtung ermöglicht. Dadurch kann die Querdrahtbereitstellungseinrichtung rasch und einfach an unterschiedliche Längen von Querdrähten angepasst werden, die auf dem ersten Transportband quer zu ihrer Längsrichtung gefördert werden.

Gemäss einer bevorzugten Ausführungsart der Erfindung weist die Cluerdrahtbereitstellungseinrichtung weiter wenigstens ein zweites zur Förderung der vereinzelten Querdrähte ausgebildetes Transportband auf, das als Teil einer zweiten Montageeinheit ausgebildet ist, die als Ganzes quer zur Zuführrichtung und parallel zur ersten Montageeinheit verschiebbar ist, sowie zweite Verschiebemittel zum Verschieben der zweiten Montageeinheit quer zur Zuführrichtung und parallel zur ersten Montageeinheit. Die wenigstens zwei quer zur Zuführrichtung verstellbaren Transportbänder ermöglichen sowohl eine Anpassung der Querdrahtbereitstellungseinrichtung an unterschiedliche Querdrahtlängen als auch eine Änderung der Bereitstellungsposition, in welcher die Querdrähte bereit gestellt werden, in Bezug auf die Querdrahtlängsrichtung.

Die ersten und zweiten Verschiebemittel können derart ausgebildet sein, dass sie ein vollständig voneinander unabhängiges Verschieben der ersten und zweiten Montageeinheit gewährleisten. Als Alternative dazu können die ersten und zweiten Verschiebemittel jedoch auch derart ausgebildet sein, dass die erste und zweite Montageeinheit lediglich teilweise unabhängig voneinander verschiebbar sind. Sie können z.B. derart ausgebildet sein, dass die erste und zweite Montageeinheit lediglich nacheinander in zwei voneinander unabhängige Verschiebepositionen verschiebbar sind oder bei einer gleichzeitigen Verschiebung lediglich parallel zueinander mit gleicher Verschiebegeschwindigkeit verschiebbar sind.

Vorzugsweise weisen bei der Erfindungsvariante mit wenigstens zwei quer zur Zuführrichtung verschiebbaren Montageeinheiten die ersten und zweiten Verschiebemittel eine gemeinsame Gewindespindel auf, die sich parallel zur Verschieberichtung der ersten und zweiten Montageeinheiten erstreckt und die mit einem Aussengewinde versehen und zum Verschieben sowohl der ersten als auch der zweiten Montageeinheit ausgebildet ist. Die Verwendung einer gemeinsamen Gewindespindel zum Verschieben der ersten und der zweiten Montageeinheit erlaubt eine besonders einfache und kostengünstige Konstruktion der Verschiebemittel. Grundsätzlich sind jedoch auch andere geeignete Mittel zum Verschieben der Montageeinheiten verwendbar, so z.B. Linearantriebe auf der Basis von Zahnriemen, Umlaufketten oder Ritzel-Zahnstangen.

Im Falle von Verschiebemittel mit einer gemeinsamen Gewindespindel können die ersten Verschiebemittel eine erste Schlossmutter aufweisen, die mit der ersten Montageeinheit verbunden ist und ein Innengewinde aufweist, das wahlweise mit der Gewindespindel in Eingriff bringbar und wieder ausser Eingriff bringbar ist, um bei rotierender Gewindespindel die erste Montageeinheit wahlweise entweder nach Art eines Spindel-Mutter-Triebs quer zur Zuführrichtung zu verschieben oder bezüglich dem stationären Maschinengestell ruhen zu lassen. Analog können die zweiten Verschiebemittel eine zweite Schlossmutter aufweisen, die mit der zweiten Montageeinheit verbunden ist und ein Innengewinde aufweist, das wahlweise mit der Gewindespindel in Eingriff bringbar und wieder ausser Eingriff bringbar ist, um bei rotierender Gewindespindel die zweite Montageeinheit (17, 19) wahlweise entweder nach Art eines Spindel-Mutter-Triebs quer zur Zuführrichtung zu verschieben oder ruhen zu lassen. Dabei sind die beiden Schlossmuttern vorzugsweise unabhängig voneinander betätigbar, um ein voneinander im Wesentlichen unabhängiges Verschieben der beiden Montageeinheiten zu ermöglichen.

Vorteilhafterweise ist im Falle von wenigstens zwei quer zur Zuführrichtung verschiebbaren Montageeinheiten eine Transportbandantriebswelle vorgesehen, die im stationären Maschinengestell um eine erste quer zur Zuführrichtung verlaufende Drehachse drehbar und in Wellenlängsrichtung unverschiebbar gelagert ist, wobei diese Transportbandantriebswelle zum Antreiben sowohl des ersten Transportbands bezüglich der ersten Montageeinheit als auch des zweiten Transportbands bezüglich der zweiten Montageeinheit ausgebildet ist. Dadurch kann auf einfache Art eine Synchronisierung der Transportbänder der beiden Montageeinheiten gewährleistet werden. Um die Verschiebbarkeit der Montageeinheiten nicht zu beeinträchtigen, ist die Transportbandantriebswelle zwar drehfest, jedoch in Wellenlängsrichtung verschiebbar mit den Montageeinheiten gekoppelt.

Vorteilhafterweise ist eine weitere Antriebswelle vorgesehen, die im stationären Maschinengestell um eine zweite, zur ersten Drehachse parallele Drehachse drehbar und in Wellenlängsrichtung unverschiebbar gelagert ist, wobei diese weitere Antriebswelle zum Antreiben sowohl einer ersten Funktionseinheit, die bezüglich der ersten Montageeinheit drehbar ist, als auch einer zweiten Funktionseinheit, die bezüglich der zweiten Montageeinheit drehbar ist, ausgebildet ist. Auf diese Art können weitere Funktionseinheiten auf den verschiedenen Montageeinheiten synchron zueinander angetrieben werden. Die weitere Antriebswelle ist wiederum zwar drehfest, jedoch in Wellenlängsrichtung verschiebbar mit den Montageeinheiten gekoppelt, um die Verschiebbarkeit der Montageeinheiten bezüglich dem stationären Maschinengestell zu gewährleisten.

Eine von der weiteren Antriebswelle angetriebene Funktionseinheit kann z.B. ein mit Auskämmnuten (auch als Mitnehmernuten bezeichnet) versehenes Auskämmrad (auch als Mitnehmerrad oder Mitnehmerscheibe bezeichnet) sein, das um eine Drehachse drehbar an einer Montageeinheit angeordnet und zum Auskämmen eines einzelnen Querdrahts aus einer Mehrzahl von Querdrähten ausgebildet ist. Auskämmräder sind an sich bekannte Vorrichtungen, die zur Vereinzelung von Drähten aus einem Drahtbündel dienen.

Eine von der weiteren Antriebswelle angetrieben Funktionseinheit kann auch ein Stützrad sein, das um eine Drehachse drehbar an einer Montageeinheit angeordnet und zum Stützen eines insbesondere langen Querdrahts ausgebildet ist. Das Stützrad kann insbesondere parallel zu einem Auskämmrad angeordnet und synchron mit diesem angetrieben sein, um den Querdraht während dem Auskämmen zu stützen.

Eine weitere vorteilhafte Variante der Erfindung zeichnet sich dadurch aus, dass an der Montageeinheit ein Führungsschild fest angebracht ist, der zum seitlichen Führen der Querdrähte während der Förderung der Querdrähte auf dem an der selben Montageeinheit angeordneten Transportband ausgebildet und angeordnet ist. Dies ermöglicht es den Führungsschild auf einfache Art zusammen mit der Montageeinheit zu verschieben, wenn der Führungsschild zum Zwecke einer Anpassung an eine geänderte Querdrahtlänge verstellt werden muss.

Gemäss einer weiteren bevorzugten Ausführungsart der Erfindung umfasst die Querdrahtbereitstellungseinrichtung weiter eine Positionsmessvorrichtung und eine Steuerungsvorrichtung. Die Positionsmessvorrichtung ist zum automatischen Messen der Position von sämtlichen Montageeinheiten bezüglich dem stationären Maschinengestell, zum Erzeugen von Positionssignalen entsprechend den gemessenen Positionen und zum Übertragen dieser Positionssignale an die Steuerungsvorrichtung ausgebildet. Die Steuerungsvorrichtung ist zum Empfangen der Positionssignale, zum Erzeugen von Steuerungssignalen in Abhängigkeit der Positionssignale und zum Übertragen der Steuerungssignale an die Verschiebemittel ausgebildet. Die Verschiebemittel ihrerseits sind zum Verschieben der Montageeinheiten in Abhängigkeit der von der Steuerungsvorrichtung empfangenen Steuerungssignale ausgebildet. Dadurch wird eine automatische Verschiebung der Montageeinheiten zum Anpassen der Querdrahtbereitstellungseinrichtung an geänderte Querdrahtabmessungen ermöglicht.

Vorzugsweise ist die Positionsmessvorrichtung zum Messen der Positionen der Montageeinheiten auf der Basis von Induktionswiderstandsmessungen ausgebildet. Positionsmesssensoren auf der Basis von Induktionswiderstandsmessungen sind wenig störungs- und verschmutzungsanfällig und deshalb gut für den Einsatz in der rauhen Umgebung von Schweissmaschinen geeignet.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1: eine Querdrahtbereitstellungseinrichtung für eine Gitterschweissanlage gemäss einer bevorzugten Ausführungsart der Erfindung in einer vereinfachten, perspektivischen Teilansicht von schräg vorne;
- Fig. 2: eine vereinfachte, schematische Querschnittansicht auf die Querdrahtbereitstellungseinrichtung aus Fig. 1;
- Fig. 3: eine vereinfachte perspektivische Detailansicht auf einen Universalschlitten der Querdrahtbereitstellungseinrichtung aus Fig. 1.

Grundsätzlich sind in den Figuren gleiche Teile mit gleichen Bezugszeichen versehen.

### Wege zur Ausführung der Erfindung

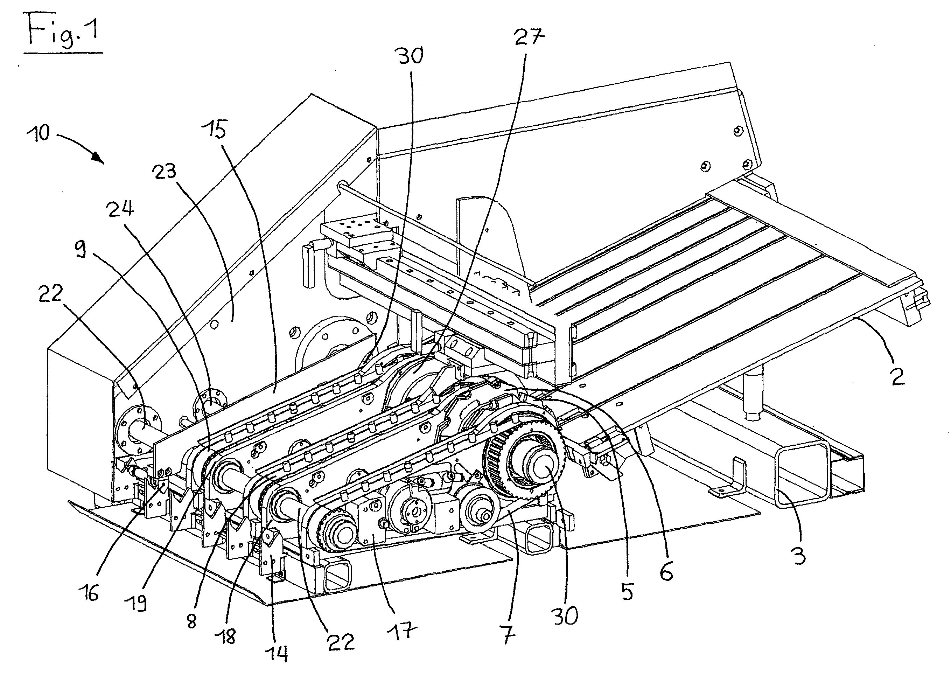

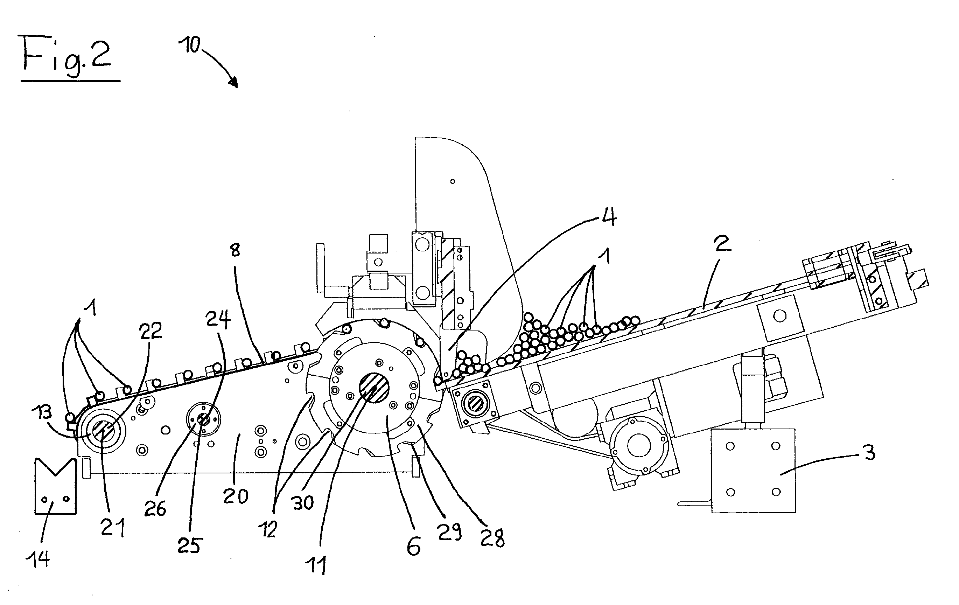

Die in Fig. 1 und 2 dargestellte Querdraht-Bereitstellungseinrichtung 10 ist Teil einer Gitterschweissanlage zum Herstellen von Drahtgittern aus einander kreuzenden und an den Kreuzungspunkten miteinander verschweissten Längs- und Querdrähten 1. Die Gitterschweissanlage weist eine Schweissmaschine (nicht dargestellt) zum Verschweissen eines Querdrahts 1 mit einer Mehrzahl von Längsdrähten und eine Querdrahtzuführungseinrichtung zum Aufnehmen des Querdrahts 1 und zum Zuführen des Querdrahts 1 an die Schweissmaschine auf. Die Querdrahtzuführungseinrichtung umfasst die in Fig. 1 und 2 dargestellte Querdrahtbereitstellungseinrichtung 10. Diese dient zur bundweisen Aufnahme von Querdrähten 1, zur Vereinzelung der Querdrähte 1 sowie zur Bereitstellung der vereinzelten Querdrähte 1 nacheinander in einer durch die Querdrahtbereitstellungseinrichtung 10 definierten Bereitstellungsposition. Die Querdrahtzuführungseinrichtung umfasst weiter eine Querdraht-Transporteinrichtung (nicht dargestellt), welche die vereinzelten Querdrähte 1 nacheinander in der Bereitstellungsposition abholt und von der Bereitstellungsposition in eine vorgegebene Querdrahtsollposition in der Schweissmaschine transportiert.

Für den Betrieb der Gitterschweissanlage wird ein loser Bund aus einer Vielzahl von Querdrähten 1 auf eine Plattform 2 der Querdrahtbereitstellungseinrichtung 10 geladen, die auf einem stationären Maschinengestell 3 der Querdrahtbereitstellungseinrichtung 10 angeordnet ist. Die Oberseite der Plattform 2 ist nach Art einer geneigten Ebene ausgebildet und angeordnet. Sie dient als Auflage- bzw. als Zuführfläche für die Querdrähte 1. Die Querdrähte 1 werden mit ihrer Längsrichtung quer zu den Falllinien der geneigten Zuführfläche (und somit horizontal) ausgerichtet, so dass sie aufgrund der Schwerkraft quer zu ihrer Längsrichtung auf der Zuführfläche den Faillinien entlang nach unten (d.h. in Zuführrichtung) rollen oder gleiten. Im Bereich des unteren (in Bezug auf die Zuführrichtung vorderen) horizontalen Randes der Zuführfläche ist ein Rückweisorgan 4 (auch als Abstreiforgan bezeichnet) über der Zuführfläche derart angeordnet, dass zwischen dem Rückweisorgan 4 und der Zuführfläche ein Kontrollspalt gebildet wird. Die Höhe dieses Kontrollspalts ist derart bemessen, dass die Querdrähte 1 den Kontrollspalt lediglich als einlagige Drahtschicht mit geringem Spiel passieren können. Querdrähte 1, die auf der untersten Querdrahtlage aufliegen, werden vom Rückweisorgan 4 zurückgewiesen.

Die Querdrahtbereitstellungseinrichtung 10 umfasst weiter mehrere Auskämmräder 5, 6, von denen in der Darstellung der Fig. 1 zwei dargestellt sind. Die Auskämmräder 5, 6 sind im Wesentlichen identisch zueinander ausgebildet und in Bezug auf die Zuführrichtung unmittelbar vor dem Kontrollspalt parallel zueinander um eine gemeinsame (virtuelle) Drehachse 11 drehbar angeordnet. Die als Auskämmrad-Drehachse 11 bezeichnete gemeinsame Drehachse 11 der Auskämmräder 5, 6 verläuft parallel zur Ebene der Zuführfläche und senkrecht zu den Falllinien dieser Ebene (d.h. insgesamt parallel zur Querdrahtlängsrichtung und somit horizontal). Die Auskämmräder 5, 6 haben eine im Wesentlichen kreiszylindermantelförmige Umfangsfläche und sind derart um die (virtuelle) Drehachse 11 drehbar, dass die Drehachse 11 mit der (geometrischen) Zylinderachse der Umfangsfläche übereinstimmt. Die Auskämmräder 5, 6 sind bezüglich der Zuführfläche derart angeordnet, dass der in Bezug auf die Zuführrichtung vordere Rand der geneigten Zuführfläche mit geringem Spielabstand unmittelbar hinter einer im Wesentlichen vertikalen Partie der Umfangsflächen der Auskämmräder 5, 6 liegt.

In den Umfangsflächen der Auskämmräder 5, 6 sind in regelmässigen tangentialen Abständen jeweils zueinander identische Nuten 12 (Auskämmnuten) ausgebildet, die sich parallel zur Auskämmrad-Drehachse 11 erstrecken. Während des Betriebs der Gitterschweissanlage rotieren die Auskämmräder 5, 6 synchron zueinander kontinuierlich um die Auskämmrad-Drehachse 11, wobei die Auskämmräder 5, 6 derart zueinander synchronisiert sind, dass einander entsprechende Auskämmnuten 12 der verschiedenen Auskämmräder 5, 6 je eine Serie (entsprechend der Anzahl der Auskämmräder 5, 6) von Auskämmnuten 12 bilden, die in zur Auskämmrad-Drehachse 11 paralleler Richtung zueinander fluchten. Die Drehrichtung der Auskämmräder 5, 6 ist derart, dass die unmittelbar vor dem vorderen Rand der Zuführflächen liegenden Partien der Umfangsflächen der Auskämmräder 5, 6 nach oben laufen. Dadurch wird bewirkt, dass jeder durch die Schwerkraft auf der Zuführfläche nach vorne und unten geförderte Querdraht 1 unmittelbar nach dem Passieren des Kontrollspalts jeweils einzeln in eine der Serien von zueinander fluchtenden Auskämmnuten 12 gefördert wird. Die Dicke der Auskämmnuten 12 ist dem Durchmesser der Querdrähte 1 derart angepasst, dass in jeder Auskämmnutserie nur ein Querdraht 1 aufgenommen wird. Die in den Auskämmnuten 12 aufgenommenen Querdrähte 1 werden von den rotierenden Auskämmrädern 5, 6 nach oben mitgenommen und auf einer kreisförmigen Bahn entsprechend dem radialen Abstand der Auskämmnuten 12 zur Auskämmrad-Drehachse 11 von der Zuführfläche weg gefördert. Die Auskämmräder 5, 6 bewirken die eigentliche Vereinzelung der Querdrähte 1, denn die zuvor aneinanderliegenden Querdrähte 1 sind nun einzeln in den Auskämmnutserien 12 der Auskämmräder 5, 6 angeordnet, wobei die Auskämmnutserien 12 in den Umfangsflächen der Auskämmräder 5, 6 in tangentialer Richtung voneinander beabstandet sind.

Die Querdrahtbereitstellungseinrichtung 10 ist weiter mit mehreren Transportbändern 7, 8, 9 versehen, von denen in der Darstellung der Fig. 1 drei dargestellt sind. Jedes Transportband 7, 8, 9 ist nach Art eines endlos umlaufenden Förderbandes ausgebildet, dessen oberes Trum während des Betriebs der Gitterschweissanlage die Querstäbe 1 von den Auskämmrädern und der Zuführfläche weg nach vorne und unten fördert. Die Transportbänder 7, 8, 9 sind je identisch zueinander ausgebildet und in Bezug auf die Richtung der Auskämmrad-Drehachse 11 parallel zueinander angeordnet. Während des Betriebs laufen die Transportbänder 7, 8, 9 je in einer zur Auskämmrad-Drehachse 11 senkrechten (und somit vertikalen) Ebene endlos um. Jedes Transportband 7, 8, 9 ist auf seiner Aussenseite mit nach aussen vorstehenden Nocken versehen, wobei die Bezeichnung "aussen" im vorliegenden Zusammenhang in Bezug auf die Umlaufrichtung des Transportbandes 7, 8, 9 zu verstehen ist. Die Nocken sind in regelmässigen Abständen über die gesamte Bandlänge verteilt angeordnet. Während des Betriebs laufen alle Transportbänder 7, 8, 9 synchron zueinander, wobei die Transportbänder 7, 8, 9 derart zueinander synchronisiert sind, dass einander entsprechende Nocken der verschiedenen Transportbänder 7, 8, 9 je eine Serie (entsprechend der Anzahl der Transportbänder) von Nocken bilden, die in Bezug auf die Richtung der Auskämmrad-Drehachse 11 parallel zueinander angeordnet sind. In Bezug auf die durch die Förderrichtung des Transportbandes 7, 8, 9 bestimmte Zuführrichtung wird zwischen zwei benachbarten Nockenserien jeweils ein Transportfach definiert, das zur Aufnahme eines Querdrahts 1 dient. Jeder der in den Nuten 12 der Auskämmräder 5, 6 aufgenommenen Querdrähte 1 wird durch die rotierenden Auskämmräder 5, 6 auf einer kreisförmigen Bahn von der Zuführfläche auf die Transportbänder 7, 8, 9 gefördert und dort einzeln je in einem Transportfach abgelegt, wobei die Länge des Transportwegs der Querdrähte 1 von der Zuführfläche bis auf die Transportbänder ungefähr ein Drittel des der kreisförmigen Bahn entsprechenden Kreisumfangs beträgt.

Nachdem die Querdrähte einzeln in die Transportfächer abgelegt sind, werden sie durch das obere Trum der Transportbänder 7, 8, 9 in einer durch dieses Trum definierten Zuführrichtung schräg nach vorne und unten gefördert. Im Bereich der Transportband-Antriebsrollen 13, die zugleich als vorderste Umlenkrolle von jedem Transportband 7, 8, 9, ausgebildet sind, werden die Querdrähte 1 nacheinander in einen stationären Querdrahthalter 14 der Querdrahtbereitstellungseinrichtung abgelegt bzw. abgeworfen. Dieser Querdrahthalter 14 umfasst eine Mehrzahl von identisch ausgebildeten plattenförmigen Halteteile, in deren Oberseite je eine V-förmige Nut ausgebildet ist. Die Halteteile sind derart angeordnet, dass ihre V-förmigen Nuten in zur Auskämmrad-Drehachse 11 paralleler Richtung zueinander fluchten. Durch den Querdrahthalter 14 wird die Bereitstellungsposition der Querdrähte 1 in Bezug auf die Richtungen senkrecht zur Querdrahtlängsrichtung definiert.

Die Position der Querdrähte 1 in Querdrahtlängsrichtung (und somit die Bereitstellungsposition der Querdrähte in Bezug auf die Querdrahtlängsrichtung) wird zunächst durch zwei vertikale Führungsschilder 15 grob festgelegt, die in Bezug auf die Zuführrichtung seitlich neben den beiden äussersten Transportbändern 9 der Querdrahtbereitstellungseinrichtung angeordnet sind. Diese Führungsschilder 15 sind in Bezug auf die Zuführrichtung von hinten nach vorne leicht konisch aufeinander zulaufend angeordnet und wirken während des Transports der Querdrähte 1 auf den Transportbändern 7, 8, 9 in stossender Funktion auf das ihnen zugewandte Längsende von jedem Querdraht 1 ein. Somit wird jeder Querdraht 1 während des Transports auf den Transportbändern 7, 8, 9 durch die Führungsschilder 15 von seinen beiden Längsenden her in Querdrahtlängsrichtung in die gewünschte Längsposition geschoben, bevor er in den Querdrahthalter 14 abgeworfen wird. Die Querdrahtbereitstellungseinrichtung 14 ist weiter mit zwei Stössel 16 versehen, die in der Verlängerung der zueinander fluchtenden Nuten des Querdrahthalters 14 angeordnet sind und in Querdrahtlängsrichtung in stossender Funktion auf je ein Längsende eines im Querdrahthalter 14 aufgenommenen Querdrahts 1 einwirken, um eine Feinjustierung der Bereitstellungsposition des Querdrahts 1 in Bezug auf die Querdrahtlängsrichtung vorzunehmen.

Mittels der Führungsschilder 15 und der Stössel 16 wird der Querdraht 1 mit einer zum späteren Verschweissen mit den Längsdrähten ausreichenden Positionsgenauigkeit in Bezug auf seine Längsrichtung in der Bereitstellungsposition bereit gestellt. Anschliessend wird der Querdraht durch die Querdraht-Transporteinrichtung (nicht dargestellt) in der Bereitstellungsposition ergriffen und unverschiebbar festgehalten, zwangsgeführt von der Bereitstellungsposition zur Querdrahtsollposition in der Schweissmaschine transportiert und dort positionsgenau abgesetzt. Dadurch wird der Querdraht derart positionsgenau in seiner Sollposition in der Schweissmaschine abgesetzt, dass in der Schweissmaschine kein Nachjustieren der Position des Querdrahts mehr erforderlich ist.

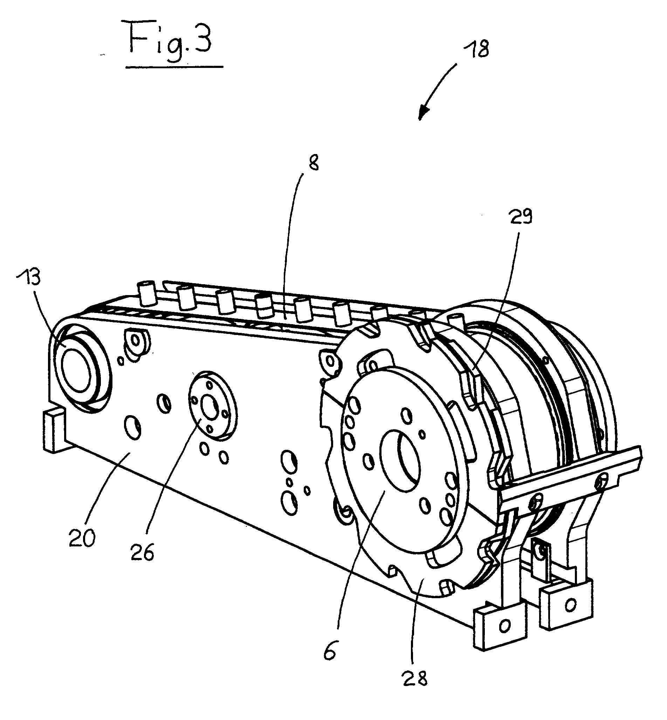

Um eine automatische Anpassung der Querdrahtbereitstellungseinrichtung auf Querdrähte mit unterschiedlichen Drahtlängen zu ermöglichen, ist jedes Transportband 7, 8, 9 als Teil einer Montageeinheit 17, 18, 19 ausgebildet, welche als Universalschlitten 17, 18, 19 bezeichnet wird und als Ganzes parallel zur Auskämmrad-Drehachse 11 (d.h. quer zur Zuführrichtung) bezüglich dem stationären Maschinengestell 3 der Querdrahtbereitstellungseinrichtung 10 verschiebbar ist. In Fig. 1 sind drei solche Universalschlitten 17, 18, 19 dargestellt, einer davon in teilweise weggebrochener Darstellung. Fig. 3 zeigt den mittleren Universalschlitten 18 aus Fig. 1 in einer perspektivischen Ansicht in Alleinstellung. In Fig. 2 ist derselbe Schlitten 18 in einer Ansicht von der Seite dargestellt, zusammen mit dem Rest der Querdrahtbereitstellungseinrichtung 10 in teilweise geschnittener Darstellung.

Der in Fig. 1-3 dargestellte Universalschlitten 18 umfasst einen als Basis- oder Tragstruktur des Universalschlittens 18 ausgebildeten Schlittenkörper 20. Zuvorderst am Schlittenkörper 20 ist die Antriebsrolle 13 für das Transportband 8 bezüglich dem Schlittenkörper 20 um eine (virtuelle) Drehachse 21 drehbar gelagert, die zur Auskämmrad-Drehachse 11 parallel ist und als Antriebsrollen-Drehachse 21 bezeichnet wird. Das Transportband 8 ist auf seiner in Bezug auf die Umlaufrichtung inneren Seite nach Art eines Zahnriemens ausgebildet und mit einer Zahnung versehen, welche mit einer entsprechenden Zahnung kämmt, die auf der äusseren Umfangsfläche der Antriebsbsrolle 13 ausgebildet ist. Insgesamt dient die Transportband-Antriebsrolle 13 somit als Antriebsritzel 13 für das nach Art eines Zahnriemens ausgebildete Transportband 8.

Die Transportband-Antriebsrolle 13 wird durch eine zur Antriebsrollen-Drehachse 13 koaxial (und somit parallel zur Antriebsrad-Drehachse) angeordnete Antriebswelle 22 (Transportband-Antriebswelle 22) zur Drehung um die Antriebsrollen-Drehachse 21 angetrieben. Die Transportband-Antriebswelle 22 ist in zwei Seitenwänden 23 bezüglich diesen in Wellenlängsrichtung unverschiebbar und um die Antriebsrollen-Drehachse 21 drehbar gelagert. Die beiden Seitenwände 23 sind je auf einer Seite seitlich ausserhalb der durch die Transportbänder 7, 8, 9 gebildeten Querdraht-Zuführstrecke angeordnet, wobei diese Seitenwände 23 als Teil des stationären Maschinengestells 3 der Querdrahtbereitstellungseinrichtung 10 ausgebildet sind. Um die Verschiebbarkeit des Universalschlittens 18 parallel zur Auskämmrad-Drehachse 11 zu gewährleisten, ist die Transportband-Antriebsrolle 13 mit der Transportband-Antriebswelle 22 zwar drehfest, jedoch in Wellenlängsrichtung bezüglich der Transportband-Antriebswelle 22 verschiebbar gekoppelt.

Für den Antrieb des Universalschlittens 18 zum Zwecke seiner Verschiebung quer zur Zuführrichtung bezüglich dem stationären Maschinengestell 3 der Querdrahtbereitstellungseinrichtung 10 ist eine mit einem Aussengewinde versehene Gewindespindel 24 vorgesehen, die sich parallel zur Auskämmrad-Drehachse 11 erstreckt und um eine zur Auskämmrad-Drehachse 11 parallele Drehachse 25 (Spindelachse 25) drehbar ist. Die Gewindespindel 24 ist in den beiden gleichen Seitenwänden 23 bezüglich diesen in Spindellängsrichtung unverschiebbar und um die Spindelachse 25 drehbar gelagert, in denen auch die Transportband-Antriebswelle 22 gelagert ist. Die Gewindespindel 24 durchsetzt den Schlittenkörper 20 und eine Schlossmutter 26, die in einem mittigen Bereich des Schlittenkörpers 20 angeordnet und mit diesem in Spindellängsrichtung (d.h. in Richtung parallel zur Auskämmrad-Drehachse 11) unverschiebbar gekoppelt ist. Die Schlossmutter ist mit einem dem Aussengewinde der Gewindespindel 24 entsprechenden Innengewinde versehen. Sie ist als teilbare Mutter ausgebildet, wobei sie durch ein Steuerungssignal gesteuert automatisch wahlweise geschlossen und wieder geöffnet werden kann. In geschlossenem Zustand ist die Schlossmutter 26 mit dem Gewinde der Gewindespindel 24 in Eingriff. Sie wirkt dann mit der Gewindespindel 24 zusammen als Spindel-Mutter-Trieb, welcher bei einer Rotation der Gewindespindel 24 um die Spindelachse 25 die Schlossmutter 26 und den mit dieser gekoppelten Universalschlitten 18 in Richtung der Spindelachse 25 (d.h. in Spindellängsrichtung) linear verschiebt. In geöffnetem Zustand ist die Schlossmutter 26 ausser Eingriff mit der Gewindespindel 24, so dass in diesem Zustand eine Rotation der Gewindespindel 24 keinen Einfluss auf die Position des Universalschlittens 18 in Spindellängsrichtung hat.

Sämtliche Universalschlitten 17, 18, 19 der in Fig. 1 und 2 dargestellten Querdrahtbereitstellungseinrichtung 10 sind hinsichtlich dem Transportband-Antrieb und dem Antrieb zum Zwecke des Verschiebens der Universalschlitten 17, 18, 19 quer zur Zuführrichtung identisch ausgebildet. Die Universalschlitten 17, 18, 19 sind in Bezug auf Auskämmrad-Drehachse 11 parallel zueinander angeordnet, wobei die Transportband-Antriebsrollen 13 der verschiedenen Universalschlitten 17, 18, 19 von einer einzigen gemeinsamen Transportband-Antriebswelle 22 angetrieben werden. Dadurch wird auf einfache Art eine Synchronisation der Transportbänder 7, 8, 9 der verschiedenen Universalschlitten 17, 18, 19 erreicht. Weiter werden auch die Schlossmuttern 26 der verschiedenen Universalschlitten 17, 18, 19 von einer einzigen gemeinsamen Gewindespindel 24 angetrieben. Hingegen werden die Schlossmuttern 26 der Universalschlitten 17, 18, 19 individuell und unabhängig voneinander gesteuert, um sie zu öffnen oder zu schliessen. Dadurch wird die Möglichkeit geschaffen, die einzelnen Universalschlitten 17, 18, 19 unabhängig voneinander quer zur Zuführrichtung zu verschieben, obwohl sie von einer gemeinsamen Gewindespindel 24 angetrieben werden.

Die in Fig. 1 und 2 dargestellte Querdrahtbereitstellungseinrichtung 10 ist weiter mit einem Positionsmesssystem versehen, welches zum automatischen Messen der Position entlang der Spindelachse 25 bezüglich dem stationären Maschinengestell 3 der Querdrahtbereitstellungseinrichtung 10 von jedem Universalschlitten 17, 18, 19 ausgebildet ist. Das Positionsmesssystem misst die Position von jedem Universalschlitten 17, 18, 19 auf der Basis einer Induktionswiderstandsmessung und überträgt die Positionsdaten an eine zentrale Maschinensteuerung. Die Maschinensteuerung erzeugt dann aufgrund der gemessenen Positionsdaten und in Abhängigkeit der Länge der zu verarbeitenden Querdrähte 1 und der gewünschten Position dieser Querdrähte 1 in Bezug auf die Querdrahtlängsrichtung Steuerungssignale zur Steuerung der Schlossmuttern 26 und der Gewindespindel 24. Anschliessend werden diese Steuerungssignale an einen Antriebsmotor (nicht dargestellt) für die Gewindespindel (24) und an Aktuatoren für die Schlossmuttern übertragen, um eine automatische Betätigung der Gewindespindel 24 und der Schlossmuttern 26 derart zu bewirken, dass die Universalschlitten 17, 18, 19 in Spindellängsrichtung auf die gewünschten Positionen verschoben werden.

Die in Fig. 1-3 dargestellten Universalwagen 17, 18, 19 sind weiter mit einem Auskämmrad 5, 6 zum Auskämmen (Vereinzeln) der Querdrähte 1 und/oder einem Stützrad 27 zum Stützen der Querdrähte 1 und/oder einem Führungsschild 15 zum Festlegen der Position der Querdrähte 1 in Querdrahtlängsrichtung versehen, wobei die Auskämmräder 5, 6, die Stützräder 27 und die Führungsschilder 15 ebenfalls zusammen mit dem Universalwagen 17, 18, 19, an dem sie angeordnet sind, quer zur Zuführrichtung verschiebbar sind. Der in Fig. 1 in Bezug auf die Zuführrichtung links angeordnete Universalwagen 17, der in teilweise weggebrochener Darstellung dargestellt ist, ist auf seiner rechten Seite mit einem ersten Auskämmrad 5 versehen. Der in Fig. 1 in der Mitte dargestellte Universalwagen 18, der weiter auch in den Fig. 2 und 3 dargestellt ist, ist auf seiner linken Seite in Bezug auf die Zuführrichtung mit einem zweiten Auskämmrad 6 versehen, dass in Bezug auf eine vertikale Spiegelebene quer zur Zuführrichtung spiegelsymmetrisch, sonst aber im Wesentlichen identisch zum ersten Auskämmrad 5 ausgebildet ist. Der in Fig. 1 in Bezug auf die Zuführrichtung aussen rechts angeordnete Universalwagen 19 ist auf seiner linken Seite mit einem Stützrad 27 zum Stützen der Querdrähte 11 während deren Transport in den Auskämmnuten 12 der Auskämmräder 5, 6 versehen. Der Radius des Stützrads 27 entspricht ungefähr dem radialen Abstand des Nutbodens der Auskämmnuten 12 von der Auskämmrad-Drehachse 11. Auf der rechten Seite ist dieser Universalwagen 19 mit einem vertikalen Führungsschild 15 versehen, der auf die rechtsseitigen Längsenden der Querdrähte 1 einwirkt, um sie in Bezug auf die Querdrahtlängsrichtung zu positionieren, wenn die Querdrähte 1 auf den Transportbändern 7, 8, 9 dem Führungsschild 15 entlang gefördert werden.

Insgesamt wird durch das automatische Positionsmesssystem, die Vorrichtung zum automatischen Verschieben der Universalschlitten 17, 18, 19 quer zur Zuführrichtung und die Möglichkeit, eine Mehrzahl von unterschiedlichen funktionellen Elementen 5, 6, 15, 27 an den Universalschlitten 17, 18, 19 anordnen zu können, gewährleistet, dass die in Fig. 1 und 2 dargestellte Querdrahtbereitstellungseinrichtung 10 für eine Vielzahl von unterschiedlichen Querdrähten 1 verwendbar ist und jeweils rasch an geänderte Querdrahtabmessungen angepasst werden kann.

Bei dem in Fig. 1-3 dargestellten Universalschlitten 18 ist im hintersten Bereich des Schlittenkörpers 20 das Auskämmrad 6 bezüglich dem Schlittenkörper 20 um die Auskämmrad-Drehachse 11 drehbar im Schlittenkörper 20 gelagert. Das Auskämmrad 6 umfasst eine erste kreisringförmige Auskämmscheibe 28 (Hauptauskämmscheibe 28), die bezüglich dem Schlittenkörper 28 um die Auskämmrad-Drehachse 11 drehbar gelagert ist. Die Hauptauskämmscheibe 28 wird durch eine zur Auskämmrad-Drehachse 11 koaxial angeordnete Antriebswelle 30 (Auskämmrad-Antriebswelle 30) zur Drehung um ihre Drehachse 11 angetrieben. Die Auskämmrad-Antriebswelle 30 ist in den beiden gleichen Seitenwänden 23 des stationären Maschinengestells 3 bezüglich diesen Seitenwänden 23 in Wellenlängsrichtung unverschiebbar und um die Auskämmrad-Drehachse 11 drehbar gelagert, in denen auch die Transportband-Antriebswelle 22 gelagert ist. Um die Verschiebbarkeit des Universalschlittens 18 parallel zur Auskämmrad-Drehachse 11 zu gewährleisten, ist die Hauptauskämmscheibe 28 mit der Auskämmrad-Antriebswelle 30 zwar drehfest, jedoch in Wellenlängsrichtung bezüglich der Auskämmrad-Antriebswelle 30 verschiebbar gekoppelt.

Das Auskämmrad 6 umfasst weiter eine zweite kreisringförmige Auskämmscheibe 29 (Hilfsauskämmscheibe 29), die bezüglich dem Schlittenkörper 20 um die Auskämmrad-Drehachse 11 drehbar gelagert ist. Die Hilfsauskämmscheibe 29 ist parallel zur Hauptauskämmscheibe 28 und unmittelbar neben derselben auf dem Universalschlitten 18 angeordnet. An der Hilfsauskämmscheibe 29 ist ein kreiszylinderstumpfförmiges Ritzel angebracht, das koaxial zur Auskämmrad-Drehachse 11 angeordnet ist. Auf seiner Aussenumfangsfläche ist das Ritzel mit einer Zahnung versehen, welche mit der Zahnung des Transportbands 8 kämmt, welches das Ritzel teilweise umschlingt. Das Ritzel dient als Antriebsritzel für die Hilfsauskämmscheibe 29 und gleichzeitig als Umlenkrolle für das Transportband 8. Das Ritzel der Hilfsauskämmscheibe 29 ist derart ausgebildet und angeordnet, dass es einerseits durch das Transportband 8 nach Art eines Antriebs- oder Transmissionsriemens zur Drehung um die Auskämmrad-Drehachse 11 angetrieben wird und dadurch die mit dem Ritzel fest verbundene Hilfsauskämmscheibe 29 zur Drehung um die Auskämmrad-Drehachse 11 antreibt. Andererseits lenkt das Ritzel der Hilfsauskämmscheibe 29 das Transportband 8 derart um, dass sein oberes Trum auf der gewünschten Bahn vom Auskämmrad 6 weg nach vorne und unten zur Transportband-Antriebsrolle 13 läuft, um die Querstäbe 1 auf dieser Bahn vom Auskämmrad 6 weg zu fördern. Das Transportband 8 hat somit zum Einen die Funktion eines Förderbandes, wobei es die Querstäbe 8 auf seinem oberen Trum fördert. Zum Andern hat das von der Transportband-Antriebswelle 22 und der Transportband-Antriebsrolle 13 angetriebene Transportband 8 aber auch die Funktion eines Antriebsriemens, welcher die Hilfsauskämmscheibe 29 zur Drehung um die Auskämmrad-Drehachse 11 antreibt, wobei das obere Trum des Transportbands 8 als Zugtrum und das untere Trum als Leertrum wirken.

Die kreisringförmige Hilfsauskämmscheibe 29 wird zwar in ihrem Zentrum von der Auskämmrad-Antriebswelle 30 durchsetzt. Die Hilfsauskämmscheibe 29 ist aber bezüglich der Auskämmrad-Antriebswelle 30 sowohl in Wellenlängsrichtung verschiebbar als auch um die Auskämmrad-Drehachse 11 drehbar. Insgesamt wird durch die Anordnung der Hilfsauskämmscheibe 29 bezüglich der Auskämmrad-Antriebswelle 30 die Verschiebbarkeit des Universalschlittens 18 parallel zur Auskämmrad-Drehachse 11 nicht beeinträchtigt.

Die Hauptauskämmscheibe 28 und die Hilfsauskämmscheibe 29 sind im Bereich ihres Aussenumfangs identisch zueinander ausgebildet und mit identischen Teil-Auskämmnuten versehen. Im Querschnitt ist jede Teil-Auskämmnut derart ausgebildet, dass ihre in Bezug auf die Laufrichtung des Auskämmrads 6 (d.h. der Laufrichtung der Haupt- und der Hilfsauskämmscheibe 28, 29) vordere Nutwand vom Nutrand in der Umfangsfläche des Auskämmrads an unter einem Winkel von ungefähr 45 ° zu einer Tangente am Nutrand in gerader Linie nach hinten zum vorderen Rand des Nutbodens abfällt. Der Nutboden ist im Wesentlichen parallel zur Umfangslinie ausgebildet. An seinem hinteren Rand schliesst die hintere Nutwand an, die sich im Wesentlichen in radialer Richtung zur vom Nutboden zur Umfangsfläche erstreckt.

Während des Betriebs werden die Hauptauskämmscheibe 28 und die Hilfsauskämmscheibe 29 synchron zueinander zur Drehung um die Auskämmrad-Drehachse 11 angetrieben, wobei die Haupt- und Hilfsauskämmscheibe 28, 29 derart zueinander synchronisiert sind, dass sie um einen wählbar einstellbaren, zwischen zwei Einstellvorgängen aber konstanten Phasenwinkel zueinander versetzt um die Auskämmrad-Drehachse 11 rotieren. Der Phasenwinkel bzw. der Versatz zwischen der Haupt- und der Hilfsauskämmscheibe 28, 29 ist derart eingestellt, dass sich die Nutquerschnitte von einander entsprechenden Teil-Auskämmnuten der Haupt- und der Hilfsauskämmscheibe 28, 29 in zur Auskämmrad-Drehachse 11 paralleler Richtung (d.h. in Nutlängsrichtung) teilweise oder vollständig überlappen. Im Falle einer vollständigen Überlappung der Nutquerschnitte der in der Haupt- und der Hilfsauskämmscheibe 28, 29 ausgebildeten Teil-Auskämmnuten entspricht der für das Auskämmrad 6 insgesamt wirksame Nutquerschnitt der Auskämmnut 12 dem vollen Nutquerschnitt einer einzigen Teil-Auskämmnut, wie sie in der Haupt- oder der Hilfsauskämmscheibe 28, 29 ausgebildet ist. Im Falle einer lediglich teilweisen Überlappung ist jedoch nur derjenige Bereich des Nutquerschnitts der in der Hauptauskämmscheibe 28 ausgebildeten Teil-Auskämmnut zum Auskämmen eines Querdrahts 1 wirksam, der mit dem Nutquerschnitt der entsprechenden in der Hilfsauskämmscheibe ausgebildeten Teil-Auskämmnut überlappt. Der für die gesamte Auskämmnut 12 des Auskämmrads 6 insgesamt wirksame Nutquerschnitt ist dann kleiner als die Nutquerschnitte der in der Hauptauskämmscheibe 28 und der Hilfsauskämmscheibe 29 ausgebildeten Teil-Auskämmnuten. Durch eine wahlweise Einstellung der Phasenverschiebung zwischen der Haupt- und der Hilfsauskämmscheibe 28, 29 kann somit der für die Auskämmnuten 12 des Auskämmrads 6 wirksame Nutquerschnitt bzw. die für die Auskämmnuten 12 des Auskämmrads 6 wirksame Nutdicke wahlweise eingestellt werden. Insgesamt bietet das Auskämmrad 6 die Möglichkeit zur Anpassung des Nutquerschnitts bzw. der Nutdicke der Auskämmnuten 12 an Querdrähte 1 mit unterschiedlichen Durchmessern.

Die in Fig. 1 und 2 dargestellte Querdrahtbereitstellungseinrichtung 10 ist zur Verarbeitung der Querdrähte 1 in einer einzigen Bahn ausgebildet. D.h., dass sämtliche Querdrähte nacheinander in der Bereitstellungsposition im Querdrahthalter 14 bereit gestellt werden. Die Querdrahtbereitstellungseinrichtung kann jedoch auch zur parallelen Verarbeitung von Querdrähten in zwei oder noch mehr Bahnen verwendet werden. Für diesen Zweck sind lediglich eine ausreichende Anzahl von Universalschlitten bereit zu stellen und mit entsprechenden Auskämmrädern, Stützrädern und Seitenführungsschildern auszurüsten.

Zusammenfassend ist festzustellen, dass durch die Erfindung eine Gitterschweissanlage angegeben wird, welche eine rasche und einfache Anpassung der Gitterschweissanlage zur Verarbeitung von Querdrähten mit geänderten Querdrahtabmessungen ermöglicht.

## Patentansprüche

1. Gitterschweissanlage zum Herstellen von Drahtgittern aus einander kreuzenden und an den Kreuzungspunkten miteinander verschweissten Längs- und Querdrähten (1), mit einer Schweissmaschine zum Verschweissen eines Querdrahts (1) mit einer Mehrzahl von Längsdrähten und einer Querdrahtzuführungseinrichtung zum Zuführen des Querdrahts an die Schweissmaschine, wobei die Querdrahtzuführungseinrichtung eine Querdrahtbereitstellungseinrichtung (10) umfasst, die zur bundweisen Aufnahme von Querdrähten (1), zur Vereinzelung der Querdrähte (1) und zur Bereitstellung der vereinzelten Querdrähte nacheinander in einer definierten Bereitstellungsposition (14) ausgebildet ist, und wobei die Querdrahtbereitstellungseinrichtung (10) ein stationäres Maschinengestell (3, 23) aufweist sowie wenigstens ein erstes Transportband (7, 8, 9), das zur Förderung der vereinzelten Querdrähte (1) ausgebildet ist und eine Zuführrichtung definiert, **dadurch gekennzeichnet, dass** das erste Transportband (7, 8, 9) als Teil einer ersten Montageeinheit (17, 18, 19) ausgebildet ist, die als Ganzes quer zur Zuführrichtung verschiebbar ist, und dass die Querdrahtbereitstellungseinrichtung (10) weiter erste Verschiebemittel (24, 26) zum Verschieben der ersten Montageeinheit (17, 18, 19) quer zur Zuführrichtung aufweist.

2. Gitterschweissanlage nach Anspruch 1, **dadurch gekennzeichnet, dass** die Querdrahtbereitstellungseinrichtung wenigstens ein zweites zur Förderung der vereinzelten Querdrähte (1) ausgebildetes Transportband (7, 8, 9) aufweist, das als Teil einer zweiten Montageeinheit (17, 18, 19) ausgebildet ist, die als Ganzes quer zur Zuführrichtung und parallel zur ersten Montageeinheit (17, 18, 19) verschiebbar ist, sowie zweite Verschiebemittel (24, 26) zum Verschieben der zweiten Montageeinheit (17, 18, 19) quer zur Zuführrichtung und parallel zur ersten Montageeinheit (17, 18, 19).

3. Gitterschweissanlage nach Anspruch 2, **dadurch gekennzeichnet, dass** die ersten und zweiten Verschiebemittel (24, 26) eine gemeinsame Gewindespindel (24) aufweisen, die sich parallel zur Verschieberichtung der ersten und zweiten Montageeinheiten (17, 18, 19) erstreckt und die mit einem Aussengewinde versehen und zum Verschieben sowohl der ersten als auch der zweiten Montageeinheit (17, 18, 19) ausgebildet ist.

4. Gitterschweissanlage nach Anspruch 3, **dadurch gekennzeichnet, dass** die ersten Verschiebemittel (24, 26) eine erste Schlossmutter (26) aufweisen, die mit der ersten Montageeinheit (18) verbunden ist und ein Innengewinde aufweist, das wahlweise mit der Gewindespindel (24) in Eingriff bringbar und wieder ausser Eingriff bringbar ist, um bei rotierender Gewindespindel (24) die erste Montageeinheit (18) nach Art eines Spindel-Mutter-Triebs wahlweise entweder quer zur Zuführrichtung zu verschieben oder ruhen zu lassen, und dass die zweiten Verschiebemittel (24) eine zweite Schlossmutter aufweisen, die mit der zweiten Montageeinheit (17, 19) verbunden ist und ein Innengewinde aufweist, das wahlweise mit der Gewindespindel (24) in Eingriff bringbar und wieder ausser Eingriff bringbar ist, um bei rotierender Gewindespindel (24) die zweite Montageeinheit (17, 19) nach Art eines Spindel-Mutter-Triebs wahlweise entweder quer zur Zuführrichtung zu verschieben oder ruhen zu lassen, wobei die beiden Schlossmuttern (26) unabhängig voneinander betätigbar sind.

5. Gitterschweissanlage nach Anspruch 2, **dadurch gekennzeichnet, dass** die Querdrahtbereitstellungseinrichtung (10) eine Transportbandantriebswelle (22) aufweist, die im stationären Maschinengestell (3, 23) um eine erste quer zur Zuführrichtung verlaufende Drehachse (21) drehbar und in Wellenlängsrichtung unverschiebbar gelagert ist, wobei dieselbe Transportbandantriebswelle (22) zum Antreiben sowohl des ersten Transportbands (7, 8, 9) bezüglich der ersten Montageeinheit (17, 18, 19) als auch des zweiten Transportbands (7, 8, 9) bezüglich der zweiten Montageeinheit (17, 18, 19) ausgebildet ist.

6. Gitterschweissanlage nach Anspruch 5, **dadurch gekennzeichnet, dass** die Querdrahtbereitstellungseinrichtung (10) eine weitere Antriebswelle (30) aufweist, die im stationären Maschinengestell (3, 23) um eine zweite, zur ersten Drehachse (21) parallele Drehachse (11) drehbar und in Wellenlängsrichtung unverschiebbar gelagert ist, wobei die weitere Antriebswelle (30) zum Antreiben sowohl einer ersten Funktionseinheit (5, 6, 27), die bezüglich der ersten Montageeinheit (17, 18, 19) drehbar ist, als auch einer zweiten Funktionseinheit (5, 6, 27), die bezüglich der zweiten Montageeinheit (17, 18, 19) drehbar ist, ausgebildet ist.

7. Gitterschweissanlage nach Anspruch 6, **dadurch gekennzeichnet, dass** wenigstens eine der ersten und zweiten Funktionseinheiten (5, 6, 27) ein mit Auskämmnuten (12) versehenes Auskämmrad (5, 6) ist, das zum Auskämmen eines einzelnen Querdrahts (1) aus einer Mehrzahl von Querdrähten (1) ausgebildet ist.

8. Gitterschweissanlage nach Anspruch 6 oder 7, **dadurch gekennzeichnet, dass** wenigstens eine der ersten und zweiten Funktionseinheiten (5, 6, 27) ein Stützrad (27) ist, das zum Stützen des Querdrahts (1) ausgebildet ist.

9. Gitterschweissanlage nach einem der Ansprüche 1 bis 8, **dadurch gekennzeichnet, dass** die Querdrahtbereitstellungseinrichtung (10) weiter einen Führungsschild (15) umfasst, der an der Montageeinheit (19) fest angebracht und zum seitlichen Führen der Querdrähte (1) während der Förderung der Querdrähte (1) auf dem Transportband (9) ausgebildet und angeordnet ist.

10. Gitterschweissanlage nach einem der Ansprüche 1 bis 9, **dadurch gekennzeichnet, dass** die Querdrahtbereitstellungseinrichtung (10) weiter eine Positionsmessvorrichtung und eine Steuerungsvorrichtung umfasst, wobei die Positionsmessvorrichtung zum automatischen Messen der Position von sämtlichen Montageeinheiten (17, 18, 19) bezüglich dem stationären Maschinengestell (3, 23), zum Erzeugen von Positionssignalen entsprechend den Positionsmessungen und zum Übertragen dieser Positionssignale an die Steuerungsvorrichtung ausgebildet ist, und wobei die Steuerungsvorrichtung zum Erzeugen von Steuerungssignalen in Abhängigkeit der Positionssignale und zum Übertragen der Steuerungssignale an die Verschiebemittel (24, 26) ausgebildet ist, und wobei die Verschiebemittel zum Verschieben der Montageeinheiten (17, 18, 19) in Abhängigkeit der von der Steuerungsvorrichtung empfangenen Steuerungssignale ausgebildet ist.

11. Gitterschweissanlage nach Anspruch 10, **dadurch gekennzeichnet, dass** die Positionsmessvorrichtung zum Messen der Positionen der Montageeinheiten (17, 18, 19) auf der Basis von Induktionswiderstandsmessungen ausgebildet ist.
